# EUROPEAN PATENT APPLICATION

(11) **EP 1 413 877 A1**
(43) Date of publication of application: **28.04.2004**
(21) Application number: 02745901.5
(22) Date of filing: 10.07.2002
(51) Int. Cl.: G01N 21/88, G01M 11/00

(54) **METHOD AND DEVICE FOR DETECTING FLAW OF WORK**

(30) Priority: 10.07.2001 JP 2001208869
(71) Applicant: TOKYO SEIMITSU CO.,LTD., Mitaka-shi Tokyo 181-8515 (JP); NTT Advanced Technology Corporation, Tokyo 163-0431 (JP)
(72) Inventor: KUME, Shigefumi, c/o Tokyo Seimitsu Co., Ltd., Mitaka-shi, Tokyo 181-8515 (JP); YOSHIDA, Kouji, c/o NTT Advanced Technology Corp., Tokyo 163-0431 (JP)
(74) Representative: Grünecker, Kinkeldey, Stockmair & Schwanhäusser Anwaltssozietät
(86) International application number: PCT/JP2002/006986
(87) International publication number: WO 2003/006969

(57) **Abstract**

The end face of an optical fiber connector(C) is imaged by a CCD camera(38). A personal computer(42) extracts a flaw portion from the obtained image data, and calculates the average luminosity of the flaw portion and that in the vicinity of the flaw portion to calculate the difference in luminosity between them. If the calculated luminosity difference, representing the depth of the flaw portion, exceeds a predetermined reference luminosity difference, the flaw is judged to affect the performance of the optical fiber and the optical fiber connector is judged to be no good. Accordingly, a work is rejected or accepted according to the depth of a flaw.

## Description

### TECHNICAL FIELD

The present invention relates to a method and a device for detecting a flaw of a work, and more particularly to a method and a device for detecting a flaw of a work, which detects whether there is a flaw on an end surface of an optical fiber connector.

### BACKGROUND ART

Generally, optical fibers are connected by an optical fiber connector, and end surfaces of ferrules into which the optical fibers are inserted are abutted and connected. An optical fiber connector having a flaw on an end surface thereof may affect the performance of an optical fiber, and thus flaw detection of an end surface is performed after an optical fiber connector is manufactured.

The flaw detection of the end surface of the optical fiber connector has been performed as follows: the end surface of the optical fiber connector is imaged by a television camera, and an operator visually detects a flaw from an enlarged image projected on a monitor.

However, the detection by this method takes time. Further, there are variations between optical fiber connectors themselves; and experience is required to increase detection accuracy.

Thus, a method for detecting a flaw using an image processing technique is proposed as an automatic detection method. This method includes the steps of imaging an end surface of an optical fiber connector by a CCD camera, extracting a flaw portion from the obtained image data, and rejecting or accepting the optical fiber connection as a product in terms of the size and the position thereof

When a flaw portion is detected by image processing, a detection capability of the flaw portion depends on accuracy of an optical microscope mounted to the CCD camera. Thus, increased accuracy of the optical microscope allows detection of a minuter flaw.

On the other hand, some flaws on the end surface of the optical fiber connector have no effect on the performance of the optical fiber depending on the depth of the flaws.

However, the conventional detection method rejects or accepts the optical fiber connector according to the size and the position only of the flaw, and if the accuracy of the optical microscope is increased to allow detection of a minute flaw, a shallow flaw that may have no effect on the optical fiber is also judged to be an unacceptable flaw.

The invention has been made in view of these problems, and has an object to provide a method and a device for detecting a flaw of a work, which can reject or accept a work according to the depth of a flaw.

### SUMMARY OF THE INVENTION

In order to achieve the above described object, the invention provides a method for detecting a flaw of a work, which detects whether there is a flaw on a surface of a work, including the steps of: imaging a surface to be detected of the work by imaging device; calculating average luminosity of a flaw portion and average luminosity in the vicinity of the flaw portion from image data imaged by the imaging device to calculate the difference in luminosity between them; determining whether the calculated luminosity difference exceeds a predetermined reference luminosity difference; and judging the flaw portion to be a flaw when it is determined that the calculated luminosity difference exceeds a predetermined reference luminosity difference.

According to the invention, the surface to be detected of the work is first imaged by the imaging device, and the flaw portion is extracted from the image data. Then, the average luminosity of the flaw portion and the average luminosity in the vicinity of the flaw portion are calculated to calculate the difference in luminosity between them. If the calculated luminosity difference, representing the depth of the flaw portion, exceeds the predetermined reference luminosity difference, the flaw portion is judged to be the flaw, and the work is determined to be no good. The reference luminosity difference is appropriately set by a user, and accordingly, the work can be rejected or accepted according to the depth of a flaw.

Further, in order to achieve the above described object, the invention provides a method for detecting a flaw of a work, which detects whether there is a flaw on a surface of a work, including the steps of: imaging a surface to be detected of the work by imaging device; calculating an area of a flaw portion from image data imaged by the imaging device; determining whether a calculated area value of the flaw portion exceeds a predetermined reference area value; calculating average luminosity of the flaw portion and average luminosity in the vicinity of the flaw portion from the image data imaged by the imaging device to calculate the difference in luminosity between them when it is determined that the area value of the flaw portion exceeds the reference area value; determining whether the calculated luminosity difference exceeds a predetermined reference luminosity difference; and judging the flaw portion to be a flaw when it is determined that the calculated luminosity difference exceeds the predetermined reference luminosity difference.

According to the invention, the surface to be detected of the work is imaged by the imaging device, and the flaw portion is extracted from the image data. Then, the area of the flaw portion is calculated to determine whether the calculated area value exceeds the predetermined reference area value. When it is determined that the calculated area value does not exceed the predetermined reference area value, the flaw portion is not judged to be the flaw, and the work is accepted. On the other hand, when it is determined that the calculated area value exceeds the predetermined reference area value, the average luminosity of the flaw portion and the average luminosity in the vicinity of the flaw portion are further calculated. If the calculated luminosity difference, representing the depth of the flaw portion, exceeds the predetermined reference luminosity difference, the flaw portion is judged to be the flaw, and the work is judged to be no good. The reference area value and the reference luminosity difference are appropriately set by the user. Accordingly, even a work determined to be no good in the judgment of the size only of the flaw portion can be accepted when the depth of the flaw is at a level that has no effect on the performance of the work.

Further, in order to achieve the above described object, the invention provides a method for detecting a flaw of a work, which detects whether there is a flaw on a surface of a work, including the steps of: imaging a surface to be detected of the work by imaging device; calculating a position of a flaw portion from image data imaged by the imaging device; determining whether the calculated position of the flaw portion exists in a predetermined reference region; calculating average luminosity of the flaw portion and average luminosity in the vicinity of the flaw portion from the image data imaged by the imaging device to calculate the difference in luminosity between them when it is determined that the position of the flaw portion exists in the predetermined reference region; determining whether the calculated luminosity difference exceeds a predetermined reference luminosity difference; and judging the flaw portion to be a flaw when it is determined that the calculated luminosity difference exceeds the predetermined reference luminosity difference.

According to the invention, the surface to be detected of the work is imaged by the imaging device, and the flaw portion is extracted from the image data. Then, the position of the flaw portion is calculated to determine whether the calculated position exists in the predetermined reference region. When it is determined that the calculated position of the flaw portion does not exist in the predetermined reference region, the work is accepted. On the other hand, when it is determined that the calculated position of the flaw portion exists in the predetermined reference region, the average luminosity of the flaw portion and the average luminosity in the vicinity of the flaw portion are further calculated. If the calculated luminosity difference, representing the depth of the flaw portion, exceeds the predetermined reference luminosity difference, the flaw portion is judged to be the flaw, and the work is judged to be no good. The reference region and the reference luminosity difference are appropriately set by the user. Accordingly, even a work determined to be no good in the judgment of the position only can be accepted when the depth of the flaw is at a level that has no effect on the performance of the work.

Preferably, the reference region is divided into a plurality of regions, and a reference luminosity difference is set for each region.

According to the invention, the reference region is divided into the plurality of regions, and the reference luminosity difference is set for each region. Accordingly, an allowable level of the depth can be set according to the position of the flaw portion, thus allowing more detailed detection.

### BRIEF DESCRIPTION OF THE DRAWINGS

Figure 1 is a block diagram of a schematic configuration of a device for detecting a flaw according to a first embodiment of the invention;
Figure 2 is a front view of a configuration of a work holding base;
Figure 3 is a flowchart of a method for detecting a flaw;
Figure 4 illustrates the method for detecting a flaw;
Figure 5 is a flowchart of a method for detecting a flaw according to a second embodiment of the invention;
Figure 6 is a flowchart of a method for detecting a flaw according to a third embodiment of the invention; and
Figure 7 illustrates regions formed on an end surface of an optical fiber connector.

### THE PREFERRED EMBODIMENTS FOR CARRYING OUT THE INVENTION

Now, preferred embodiments of a method and a device for detecting a flaw of a work according to the invention will be described in detail with reference to the accompanying drawings.

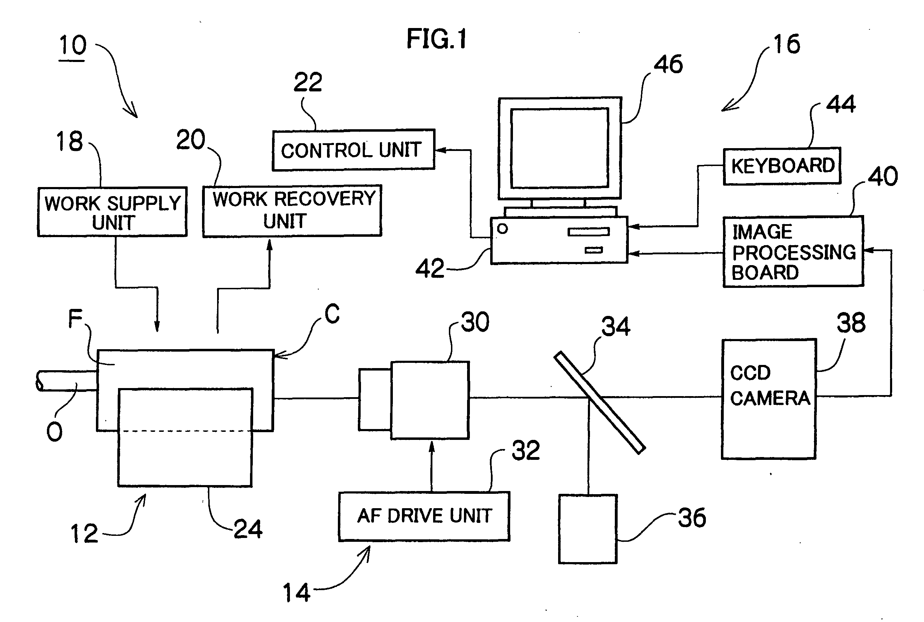

Figure 1 is a block diagram of a configuration of a device for detecting a flaw of a work according to the invention. In this embodiment, an example where detection of a flaw on an end surface of an optical fiber connector is performed will be described. An optical fiber connector C is formed by inserting an optical fiber O into an inner periphery of a cylindrical ferrule F. The ferrule F is a part having an extremely small diameter of 2.5 mm or 1.25 mm, and made of, for example, a zirconia based ceramic material.

As shown in Figure 1, a device for detecting a flaw 10 according to the embodiment mainly includes a work holding unit 12, an imaging unit 14, a detection unit 16, a work supply unit 18, a work recovery unit 20 and a control unit 22.

The work holding unit 12 has a work holding base 24 for holding an optical fiber connector C to be detected. The work holding base 24 is formed into a rectangular block shape, and a groove 26 having a V-shaped section is formed in a top surface of the work holding base 24. The ferrule F of the optical fiber connector C is placed in the groove 26. Also, an intake port 28 is formed in a bottom surface of the work holding base 24. The intake port 28 communicates with a trough of the groove 26 via an intake passage 29. A vacuum pump is connected to the intake port 28 via an unshown intake pipe, and the vacuum pump is driven to suck air in the groove 26. The air in the groove 26 is sucked to secure the optical fiber connector C placed in the groove 26 to the work holding base 24.

The imaging unit 14 images, by a CCD camera, an image of the end surface of the optical fiber connector C held by the work holding base 24. The imaging unit 14 includes an AF lens unit 30, an AF drive unit 32, a beam splitter 34, a lighting unit 36, and a CCD camera 38.

The AF lens unit 30 is placed to face the end surface of the optical fiber connector C held by the work holding base 24 so that an optical axis thereof is coaxial with a central axis of the optical fiber connector C. The AT drive unit 32 causes AF drive of the AF lens unit 30. Specifically, the AF lens unit 30 is focused on the end surface of the optical fiber connector C held by the work holding base 24 based on distance-measuring information by an unshown distance-measuring sensor. The beam splitter 34 is placed behind the AF lens unit 30, and emits light from a lighting lamp (not shown) provided in the lighting unit 36 to the end surface of the optical fiber connector C via the AF lens unit 30. The light emitted to the end surface of the optical fiber connector C is reflected from the end surface of the optical fiber connector C, and an image of the reflected light is formed on a CCD of the CCD camera 38 via the AF lens unit 30 and the beam splitter 34. The CCD camera 38 outputs the image data to the detection unit 16.

The detection unit 16 performs flaw detection according to the image data of the end surface of the optical fiber connector imaged by the CCD camera 38. The image data of the end surface of the optical fiber connector output from the CCD camera 38 is input to a personal computer 42 via an image processing board 40. The personal computer 42 performs image processing of the input image data to reject or accept the optical fiber connector C to be detected. A keyboard 44 as input means and a display 46 as display means are connected to the personal computer 42. A program for the detection is stored in a memory included in the personal computer 42.

The work supply unit 18 automatically supplies, one by one, a plurality of optical fiber connectors C accommodated in an unshown supply stocker.

The work recovery unit 20 recovers the optical fiber connector C that has been already detected from the work holding base 24, and places the optical fiber connector C into a predetermined recovery stocker (not shown) in a sorted manner according to a measurement result.

The control unit 22 controls the devices that constitute the device for detecting a flaw 10 according to control signals from the personal computer 42.

The method for detecting the flaw on the end surface of the optical fiber connector by the device for detecting a flaw 10 according to the embodiment configured as described above is as follows.

A drive signal is output to the work supply unit 18 from the control unit 22 according to the control signal from the personal computer 42. This causes one optical fiber connector C from the unshown supply stocker to be supplied to the work holding base 24, and placed in a predetermined position. When the optical fiber connector C is placed in the work holding base 24, the unshown vacuum pump is driven by the control unit 22, and the optical fiber connector C is secured to the work holding base 24.

Then, a drive signal is output to the lighting unit 36 from the control unit 22, and the lighting lamp (not shown) is lit. The light from the lighting lamp is guided in a direction of the AF lens unit 30 by the beam splitter 34, and emitted to the end surface of the optical fiber connector C through the AF lens unit 30.

Next, a drive signal is output to the AF drive unit 32 from the control unit 22 to cause the AF drive of the AF lens unit 30. This causes the AF lens unit 30 to be focused on the end surface of the optical fiber connector C held by the work holding base 24.

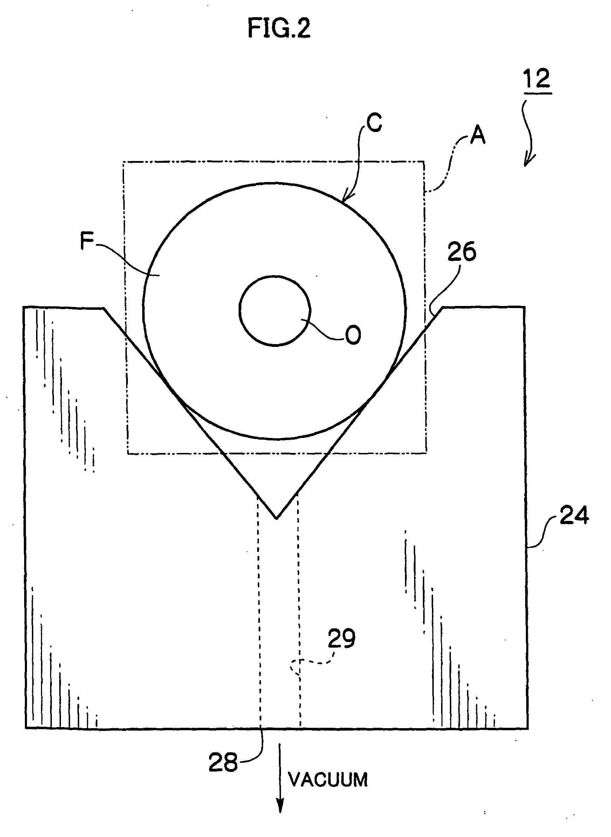

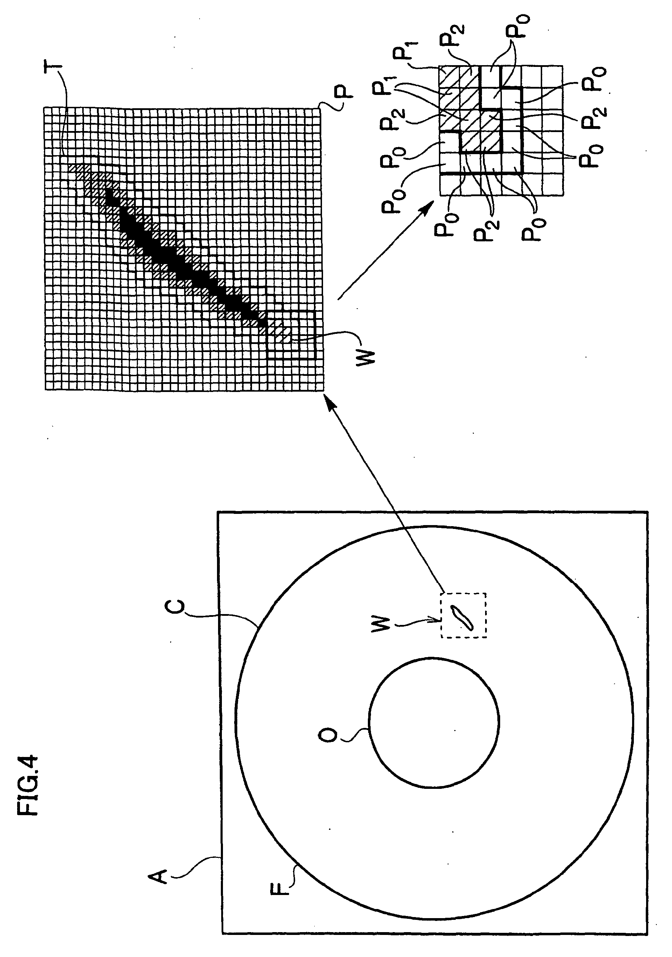

Then, the end surface of the optical fiber connector C held by the work holding base 24 is imaged by the CCD camera 38. A region A to be imaged by the CCD camera 38 is set so that the entire end surface of the optical fiber connector C is imaged as shown in Figures 2 and 4.

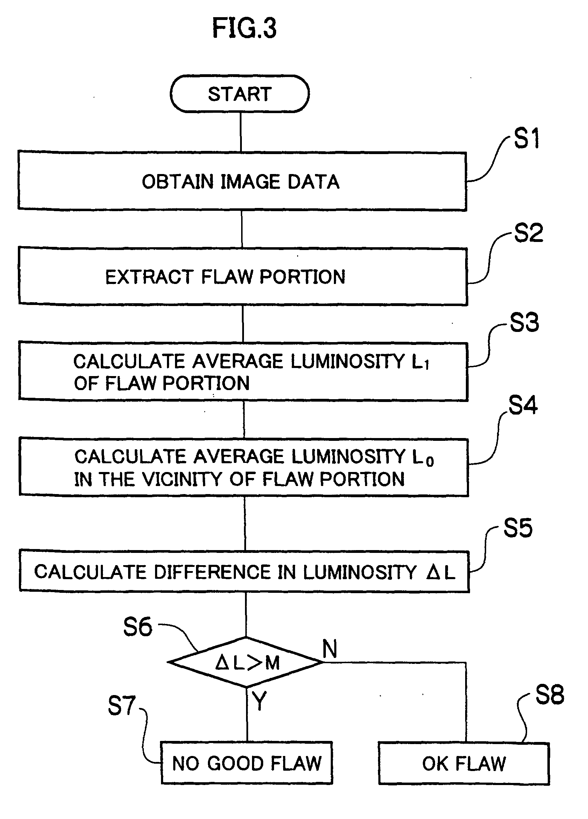

The image data of the end surface of the optical fiber connector imaged by the CCD camera 38 is input to the personal computer 42 via the image processing board 40. The personal computer 42 rejects or accepts the optical fiber connector C according to the program previously stored in the included memory. The optical fiber connector C is rejected or accepted according to a flowchart in Figure 3 as follows.

When the personal computer 42 obtains the image data of the end surface of the optical fiber connector from the CCD camera 38 (Step S1), it extracts a flaw portion W from the image data (Step S2). The flaw portion W is extracted by calculating luminosity of each pixel that constitutes a CCD from the image data, and identifying a pixel whose luminosity exceeds a reference value. The reference value is decided by a user, and input to the personal computer 42 from a keyboard 44 before the detection is started.

Then, the personal computer 42 calculates average luminosity L₁ of the extracted flaw portion W (Step S3). As shown in Figure 4, the average luminosity L₁ of the flaw portion W is calculated as an average value of luminosity of pixels P₁ and P₂ that constitute the flaw portion W (the pixels P₁ and P₂ in the region W in Figure 4).

Next, the personal computer 42 calculates average luminosity L₀ in the vicinity T of the extracted flaw portion (Step S4). As shown in Figure 4, the average luminosity L₀ in the vicinity T of the flaw portion is calculated as an average value of luminosity of pixels P₀ adjacent to the pixels P₂ that form an outline of the flaw portion W (the pixels P₀ in the region T in Figure 4).

Then, the personal computer 42 calculates the difference in luminosity ΔL between the calculated average luminosity of the flaw portion W and the average luminosity L₀ in the vicinity T of the flaw portion (ΔL = L₀ - L₁) (Step S5). The calculated luminosity difference ΔL and a reference luminosity difference M are then compared (Step S6). When the comparison indicates that the calculated luminosity difference ΔL exceeds the reference luminosity difference M, the flaw portion W is determined to be a "no good flaw" that affects the performance of the optical fiber (Step S7), and when the comparison indicates that the calculated luminosity difference ΔL is the reference luminosity difference M or less, the flaw portion W is determined to be an "ok flaw" that has no effect on the performance of the optical fiber (Step S8).

Specifically, flaw portions W having the same size but different depths have different effects on the performance of the optical fiber, and it is necessary to determine whether a flaw portion W is an "ok flaw" or a "no good flaw" according to the depth of the flaw portion W.

The flaw portions W having different depths are projected on the CCD with different luminosity, and thus the average luminosity of the flaw portion W is calculated to determine the depth of the flaw portion W.

Thus, the device for detecting a flaw according to the embodiment calculates the average luminosity L₁ of the flaw portion W, and judges the flaw portion W to be a flaw that affects the performance of the optical fiber, that is, the "no good flaw" when the average luminosity L, of the flaw portion W is higher by a fixed value (the reference luminosity difference M) than the average luminosity L₀ in the vicinity T of the flaw portion.

The reference luminosity difference M is decided by the user, and input to the personal computer 42 from the keyboard 44 before the detection is started. The value is decided based on test results or the like.

The flaw detection of the end surface of the optical fiber connector C is now finished. The determination result is displayed on the display 46 together with the average luminosity L₁ of the flaw portion W, the average luminosity L₀ in the vicinity T of the flaw portion, and the difference in luminosity ΔL. When there are a plurality of flaw portions W, detection is performed for each flaw portion W.

Then, the personal computer 42 outputs a detection finish signal to the control unit 22, and the control unit 22 receives the signal to output a drive signal to the work recovery unit 20. The work recovery unit 20 recovers the optical fiber connector from the work holding base 24, and places the optical fiber connector into the unshown stocker in the sorted manner according to the detection result. Specifically, "ok optical fiber connectors" having no flaw portion or having a flaw portion determined to be an "ok flaw" and "no good optical fiber connectors" having a "no good flaw" are sorted into separate stockers and recovered.

The series of steps described above is performed, and then the detection of one optical fiber connector C is finished. Hereafter, the detection is performed by the similar procedure.

The device for detecting a flaw 10 according to the embodiment can determine whether the flaw affects the performance of the optical fiber according to the depth of the flaw portion W. Accordingly, even if an optical fiber connector has a flaw, which has a fixed size but is shallow and has no effect on the performance of the optical fiber, the optical fiber connector can be judged to be an acceptable product, and judgment can be made in touch with reality.

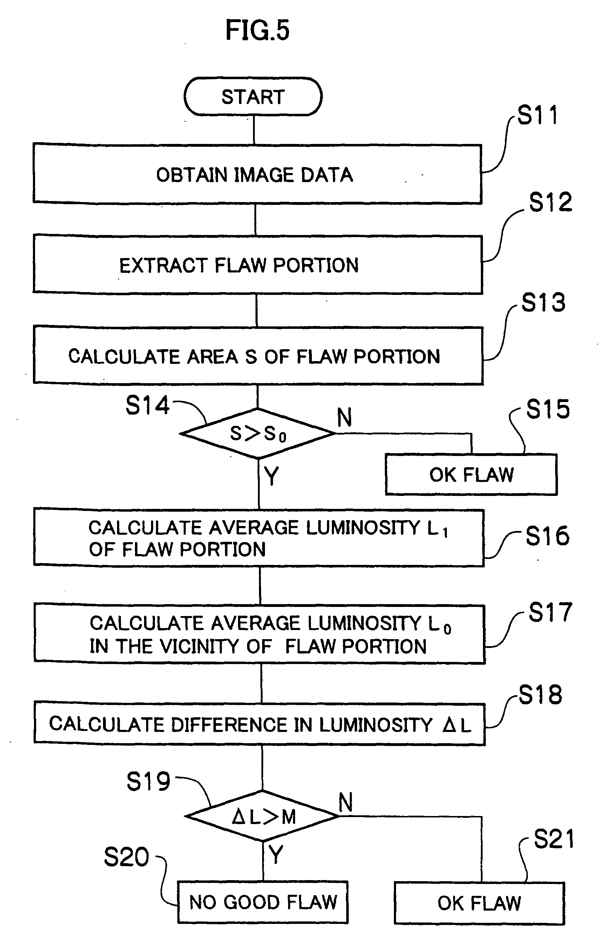

Next, a second embodiment of a method for detecting a flaw on an end surface of an optical fiber connector using the device for detecting a flaw 10 will be described. The method for detecting a flaw according to the second embodiment includes the steps of first detecting the size of a flaw portion, and further performing detection of the depth of the flaw portion to determine whether the flaw portion is a flaw when the size of the flaw portion is a fixed value or more. Specifically, the steps are performed according to a flowchart in Figure 5 as follows. Steps before image data of the end surface of the optical fiber connector is obtained are the same as the above described first embodiment, and thus steps after the image data is obtained will be now described.

When the personal computer 42 obtains the image data of the end surface of the optical fiber connector from the CCD camera 38 (Step S11), it extracts a flaw portion W from the image data (Step S12).

Then, the personal computer 42 calculates the size of the extracted flaw portion W, that is, an area value S (Step S13). The calculated area value S and a reference area value S₀ are then compared (Step S14).

The reference area value S₀ is decided by the user, and input to the personal computer 42 from the keyboard 44 before the detection is started.

When the comparison indicates that the calculated area value S is the reference area value S₀ or less, the flaw portion W is determined to be an "ok flaw" that has no effect on the performance of the optical fiber, and the detection is finished (Step S15).

On the other hand, when the comparison indicates that the calculated area value S exceeds the reference area value S₀, the flaw portion W is determined to be a flaw that may affect the performance of the optical fiber, and average luminosity L₁ of the flaw portion W and average luminosity L₀ in the vicinity T of the flaw portion are further calculated (Steps S16 and S17) to calculate the difference in luminosity ΔL (ΔL = L₀ - L₁) between them (Step S18). The calculated luminosity difference ΔL and a reference luminosity difference L are then compared (Step S19).

When the comparison indicates that the calculated luminosity difference ΔL exceeds the reference luminosity difference L, the flaw portion W is determined to be a "no good flaw" that affects the performance of the optical fiber (Step S20), and when the comparison indicates that the calculated luminosity difference ΔL is the reference luminosity difference M or less, the flaw portion W is determined to be an "ok flaw" that has no effect on the performance of the optical fiber (Step S21).

The flaw detection of the end surface of the optical fiber connector C is now finished. The determination result is displayed on the display 46 together with the area value S of the flaw portion W, the average luminosity L₁, the average luminosity L₀ in the vicinity T of the flaw portion, and the difference in luminosity ΔL. When there are a plurality of flaw portions W, detection is performed for each flaw portion W.

Then, the personal computer 42 outputs a detection finish signal to the control unit 22, and the control unit 22 receives the signal to output a drive signal to the work recovery unit 20. The work recovery unit 20 recovers the optical fiber connector from the work holding base 24, and places the optical fiber connector into the unshown stocker in the sorted manner according to the detection result.

The series of steps described above is performed, and then the detection of one optical fiber connector C is finished. Hereafter, the detection is performed by the similar procedure.

According to the device for detecting a flaw 10 of this embodiment, even if an optical fiber connector has a flaw, which has a fixed size but is shallow and has no effect on the performance of the optical fiber, the optical fiber connector can be judged to be an acceptable product, and judgment can be made in touch with reality.

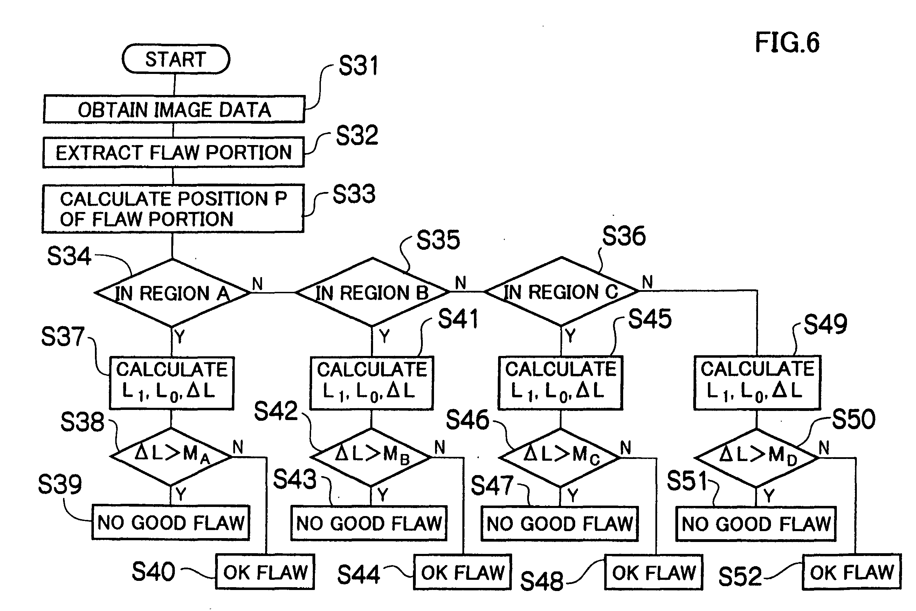

Next, a third embodiment of a method for detecting a flaw on an end surface of an optical fiber connector using the device for detecting a flaw 10 will be described. The method for detecting a flaw according to the third embodiment includes the steps of dividing the end surface of the optical fiber connector C into a plurality of regions, and setting an allowable level of the depth of a flaw portion for each region to determine a flaw. Specifically, the steps are performed according to a flowchart in Figure 6 as follows. Steps before image data of the end surface of the optical fiber connector is obtained are the same as the above described first embodiment, and thus steps after the image data is obtained will be now described.

When the personal computer 42 obtains the image data of the end surface of the optical fiber connector from the CCD camera 38 (Step S31), it extracts a flaw portion W from the image data (Step S32).

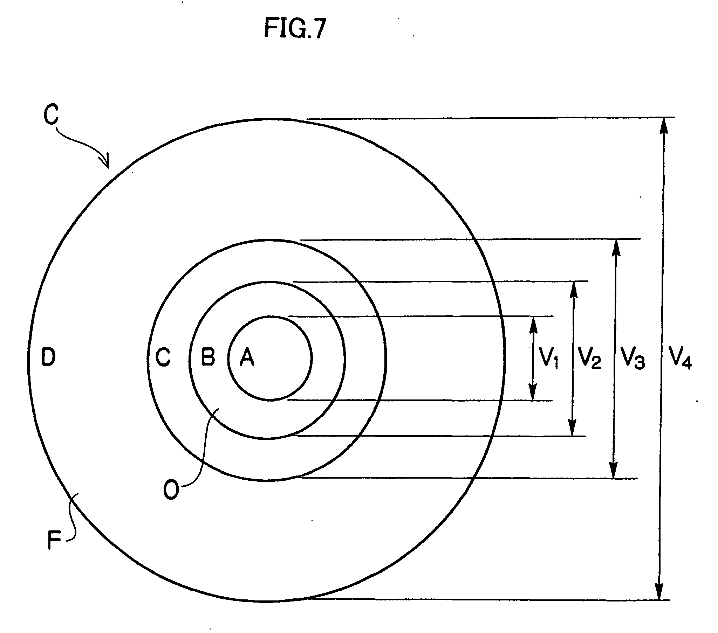

Then, the personal computer 42 calculates a position P of the extracted flaw portion W (Step S33). Then, it is determined in which region in the end surface of the optical fiber connector the calculated position P of the flaw portion W exists (Steps S34 to S36). Specifically, the end surface of the optical fiber connector C is divided into four regions A to D as shown in Figure 7, and it is determined in which of the regions the calculated position P of the flaw portion W exists.

The four regions A to D set in the end surface of the optical fiber connector C are set in the order of A, B, C and D from an inner periphery, and the region A is set to a region with a diameter of less than V₁, and the region B is set to a region with a diameter of V₁ or more and less than V₂. The region C is set to a region with a diameter of V₂ or more and less than V₃, and the region D is set to a region with a diameter of V₃ or more and less than V₄.

First, the personal computer 42 determines whether the position P of the extracted flaw portion W exists in the region A (Step S34). When it is determined that the position P of the flaw portion W exists in the region A, average luminosity L₁ of the flaw portion W and average luminosity L₀ in the vicinity T of the flaw portion are calculated to calculate the difference in luminosity ΔL (ΔL = L₀ - L₁) between them (Step S37). The calculated luminosity difference ΔL and a reference luminosity difference M_{A} are then compared (Step S38). When the comparison indicates that the calculated luminosity difference ΔL exceeds the reference luminosity difference M_{A}, the flaw portion W is determined to be a "no good flaw" that affects the performance of the optical fiber (Step S39), and when the comparison indicates that the calculated luminosity difference ΔL is the reference luminosity difference M_{A} or less, the flaw portion W is determined to be an "ok flaw" that has no effect on the performance of the optical fiber (Step S40).

On the other hand, when it is determined that the position P of the flaw portion W does not exist in the region A, it is further determined whether the position P of the flaw portion W exists in the region B (Step S35). When it is determined that the position P of the flaw portion W exists in the region B, average luminosity L₁ of the flaw portion W and average luminosity L₀ in the vicinity T of the flaw portion are calculated to calculate the difference in luminosity ΔL (ΔL = L₀ - L₁) between them (Step S41). The calculated luminosity difference ΔL and a reference luminosity difference M_{B} are then compared (Step S42). When the comparison indicates that the calculated luminosity difference ΔL exceeds the reference luminosity difference M_{B}, the flaw portion W is determined to be a "no good flaw" that affects the performance of the optical fiber (Step S43), and when the comparison indicates that the calculated luminosity difference ΔL is the reference luminosity difference M_{B} or less, the flaw portion W is determined to be an "ok flaw" that has no effect on the performance of the optical fiber (Step S44).

When it is determined that the position P of the flaw portion W does not exist in the region B either, it is further determined whether the position P of the flaw portion W exists in the region C (Step S36). When it is determined that the position P of the flaw portion W exists in the region C, average luminosity L₁ of the flaw portion W and average luminosity L₀ in the vicinity T of the flaw portion are calculated to calculate the difference in luminosity ΔL (ΔL = L₀ - L₁) between them (Step S45). The calculated luminosity difference ΔL and a reference luminosity difference M_{c} are then compared (Step S46). When the comparison indicates that the calculated luminosity difference ΔL exceeds the reference luminosity difference M_{C}, the flaw portion W is determined to be a "no good flaw" that affects the performance of the optical fiber (Step S47), and when the comparison indicates that the calculated luminosity difference ΔL is the reference luminosity difference M_{c} or less, the flaw portion W is determined to be an "ok flaw" that has no effect on the performance of the optical fiber (Step S48).

On the other hand, when it is determined that the position P of the flaw portion W does not exist in the region C either, it can be determined that the flaw portion W exists in the region D, and thus average luminosity L₁ of the flaw portion W and average luminosity L₀ in the vicinity T of the flaw portion are calculated to calculate the difference in luminosity ΔL (ΔL = L₀ - L₁) between them (Step S49). The calculated luminosity difference ΔL and a reference luminosity difference M_{D} are then compared (Step S50). When the comparison indicates that the calculated luminosity difference ΔL exceeds the reference luminosity difference M_{D}, the flaw portion W is determined to be a "no good flaw" that affects the performance of the optical fiber (Step S51), and when the comparison indicates that the calculated luminosity difference ΔL is the reference luminosity difference M_{D} or less, the flaw portion W is determined to be an "ok flaw" that has no effect on the performance of the optical fiber (Step S52).

The reference luminosity differences M_{A}, M_{B}, M_{C} and M_{D} are decided by the user according to the regions A, B, C and D, and input to the personal computer 42 from the keyboard 44 before the detection is started. Generally, an allowable range is narrower for a flaw closer to an inner periphery, and even a minute flaw is determined to be a "no good flaw".

The flaw detection of the end surface of the optical fiber connector C is now finished. The determination result is displayed on the display 46 together with the region A to D in which the flaw portion W exists, the average luminosity L₁, the average luminosity L₀ in the vicinity T of the flaw portion, and the difference in luminosity ΔL. When there are a plurality of flaw portions W, detection is performed for each flaw portion W.

Then, the personal computer 42 outputs a detection finish signal to the control unit 22, and the control unit 22 receives the signal to output a drive signal to the work recovery unit 20. The work recovery unit 20 recovers the optical fiber connector from the work holding base 24, and places the optical fiber connector into the unshown stocker in the sorted manner according to the detection result. Specifically, ok optical fiber connectors and no good optical fiber connectors are sorted into separate stockers and recovered. In this case, the no good optical fiber connectors may be further sorted according to the position of the flaw portion W.

The series of steps described above is performed, and then the detection of one optical fiber connector C is finished. Hereafter, the detection is performed by the similar procedure.

The device for detecting a flaw 10 according to this embodiment can determine whether the flaw affects the performance of the optical fiber according to the position of the flaw portion, and judgment can be made in touch with reality.

In the embodiment, the end surface of the optical fiber connector is divided into four regions A, B, C and D, but may be divided into more number of regions or less number of regions.

Alternatively, when a flaw exists in a certain region, no detection of the depth of the flaw may be performed to determine an optical fiber connector to be an ok optical fiber connector and finish the detection. Specifically, a reference region is set, and detection of the depth of a flaw only that exists in the reference region may be performed to reject or accept the optical fiber connector.

In the above described embodiments, the detection of the size of the flaw portion and the detection of the position thereof are separately performed, but may be performed at the same time. Specifically, for example, after detection of the size of a flaw portion is performed, detection of the position is further performed of a flaw portion W determined to be an "ok flaw" (after Step S15, processings after Step S33 are performed), or detection of the size is further performed of a flaw portion W determined to be an "ok flaw" in the detection of the position (after Steps S40, S44, S48 and S52, processings after Step S13 are performed). Alternatively, for example, after the detection of the size of the flaw portion and the detection of the position thereof are performed, detection of the depth may be performed of a flaw portion W determined to be a "no good flaw" in each detection. The flaw detection by these methods allows an optical fiber connector to be rejected or accepted more accurately.

In the embodiments, the optical fiber connector is rejected or accepted according to the position, the size and the depth of the flaw portion, but the optical fiber connector may be rejected or accepted according to the number of flaw portions. Specifically, an optical fiber connector having a predetermined number of "no good flaws" or more may be determined to be a no good optical fiber connector, or an optical fiber connector having a predetermined number (set by the user) of "ok flaws" or more may be determined to be a no good optical fiber connector.

In the above described embodiments, the invention is applied to the method for detecting the flaw on the end surface of the optical fiber connector, but not limited to this, the invention may be applied to detection of a flaw on an outer peripheral surface of an optical fiber connector, or detection of a flaw formed on a surface of a work other than an optical fiber connector.

Further, in the embodiments, the average luminosity of the pixel adjacent to the flaw portion is calculated when the average luminosity in the vicinity of the flaw portion is calculated, but a fixed region including a flaw portion is identified, and average luminosity of portions other than the flaw portion in the region may be calculated as average luminosity in the vicinity of the flaw portion. Alternatively, an end surface of an optical fiber connector may be previously divided into a plurality of regions, and average luminosity of portions other than a flaw portion in the regions may be calculated as average luminosity in the vicinity of the flaw portion. Further, average luminosity of the entire end surface other than a flaw portion of an optical fiber connector may be calculated as average luminosity in the vicinity of the flaw portion.

The image obtained by imaging with the CCD camera 38 has uneven luminosity even on portions without a flaw, and thus the most accurate detection can be performed by calculating the average luminosity of the pixel adjacent to the flaw portion as the average luminosity in the vicinity of the flaw portion as described in the embodiment.

In the embodiments, the imaging region A of the CCD camera 38 is set so that the entire end surface of the optical fiber connector C is imaged, but when detection of a flaw on a specific portion, for example, a center of the optical fiber connector C is performed, the imaging region A is preferably set so that the portion only is imaged.

### INDUSTRIAL APPLICABILITY

As described above, according to the invention, a work can rejected or accepted according to the depth of a flaw portion formed on a surface of the work. Accordingly, even if a work has a flaw on a surface thereof, which has a fixed size but is shallow and has no effect on the performance of the work, the work can be judged to be acceptable, and judgment can be made in touch with reality.

## Claims

1. A method for detecting a flaw of a work, which detects whether there is a flaw on a surface of a work comprising the steps of:
imaging a surface to be detected of the work by imaging device;
calculating average luminosity of a flaw portion and average luminosity in the vicinity of the flaw portion from image data imaged by said imaging device to calculate the difference in luminosity between them;
determining whether the calculated luminosity difference exceeds a predetermined reference luminosity difference; and
judging the flaw portion to be a flaw when it is determined that the calculated luminosity difference exceeds the predetermined reference luminosity difference.

2. A method for detecting a flaw of a work, which detects whether there is a flaw on a surface of a work comprising the steps of:
imaging a surface to be detected of the work by imaging device;
calculating an area of a flaw portion from image data imaged by said imaging device;
determining whether a calculated area value of the flaw portion exceeds a predetermined reference area value;
calculating average luminosity of the flaw portion and average luminosity in the vicinity of the flaw portion from the image data imaged by said imaging device to calculate the difference in luminosity between them when it is determined that the area value of the flaw portion exceeds the reference area value;
determining whether the calculated luminosity difference exceeds a predetermined reference luminosity difference; and
judging the flaw portion to be a flaw when it is determined that the calculated luminosity difference exceeds the predetermined reference luminosity difference.

3. A method for detecting a flaw of a work, which detects whether there is a flaw on a surface of a work comprising the steps of:
imaging a surface to be detected of the work by imaging device;
calculating a position of a flaw portion from image data imaged by said imaging device;
determining whether the calculated position of the flaw portion exists in a predetermined reference region;
calculating average luminosity of the flaw portion and average luminosity in the vicinity of the flaw portion from the image data imaged by said imaging device to calculate the difference in luminosity between them when it is determined that the position of the flaw portion exists in the predetermined reference region;
determining whether the calculated luminosity difference exceeds a predetermined reference luminosity difference; and
judging the flaw portion to be a flaw when it is determined that the calculated luminosity difference exceeds the predetermined reference luminosity difference.

4. The method for detecting a flaw of a work according to claim 3, wherein said reference region is divided into a plurality of regions, and a reference luminosity difference is set for each region.

5. A device for detecting a flaw of a work, which detects whether there is a flaw on a surface of a work comprising:
imaging device for imaging a surface to be detected of the work;
luminosity difference calculation device for calculating average luminosity of a flaw portion and average luminosity in the vicinity of the flaw portion from image data imaged by said imaging device to calculate the difference in luminosity between them; and
determination device for determining whether the luminosity difference calculated by said luminosity difference calculation device exceeds a predetermined reference luminosity difference, and judging the flaw portion to be a flaw when it is determined that the luminosity difference exceeds the predetermined reference luminosity difference.

6. A device for detecting a flaw of a work, which detects whether there is a flaw on a surface of a work comprising:
imaging device for imaging a surface to be detected of the work;
area value calculation device for calculating an area of a flaw portion from image data imaged by said imaging device;
first determination device for determining whether an area value of the flaw portion calculated by said area value calculation device exceeds a predetermined reference area value;
luminosity difference calculation device for calculating average luminosity of the flaw portion and average luminosity in the vicinity of the flaw portion from the image data imaged by said imaging device to calculate the difference in luminosity between them when said first determination device determines that the area value of the flaw portion exceeds the reference area value; and
second determination device for determining whether the luminosity difference calculated by said luminosity difference calculation device exceeds a predetermined reference luminosity difference, and judging the flaw portion to be a flaw when it is determined that the luminosity difference exceeds the predetermined reference luminosity difference.

7. A device for detecting a flaw of a work, which detects whether there is a flaw on a surface of a work comprising:
imaging device for imaging a surface to be detected of the work;
flaw position calculation device for calculating a position of a flaw portion from image data imaged by said imaging device;
first determination device for determining whether the position of the flaw portion calculated by said flaw position calculation device exists in a predetermined reference region;
luminosity difference calculation device for calculating average luminosity of the flaw portion and average luminosity in the vicinity of the flaw portion from the image data imaged by said imaging device to calculate the difference in luminosity between them when said first determination device determines that the position of the flaw portion exists in the predetermined reference region; and
second determination device for determining whether the luminosity difference calculated by said luminosity difference calculation device exceeds a predetermined reference luminosity difference, and judging the flaw portion to be a flaw when it is determined that the luminosity difference exceeds the predetermined reference luminosity difference.

8. The device for detecting a flaw of a work according to claim 7, wherein said reference region is divided into a plurality of regions, and a reference luminosity difference is set for each region.
